# EUROPEAN PATENT APPLICATION

(11) **EP 4 167 606 A1**
(43) Date of publication of application: **19.04.2023**
(21) Application number: 21202062.2
(22) Date of filing: 12.10.2021
(51) Int. Cl.: H04W 4/24, H04W 4/38, H04W 4/44, H04W 4/46, G08G 1/01, G08G 1/16, G08G 1/04, G08G 1/09, G08G 1/0967

(54) **COOPERATIVE INTELLIGENT TRANSPORT SYSTEM AND METHOD WITH CPM AREA PERCEPTION REQUEST**

(71) Applicant: DENSO CORPORATION, Kariya-city, Aichi-pref., 448-8661 (JP)
(72) Inventor: MITTAL, Prachi, 85386 Eching (DE); LEINMÜLLER, Tim, 85386 Eching (DE)
(74) Representative: Winter, Brandl - Partnerschaft mbB

(57) **Abstract**

A method for exchanging of information in an intelligent transport system between a plurality of intelligent transport system stations (ITS-Ss) in said intelligent transport system (ITS) uses a wireless communication channel. The exchanging of information comprises composing, transmitting, receiving and/or decoding at least part of ITS messages at and/or between said plurality of ITS-Ss, wherein each of said plurality of intelligent transport system stations (ITS-Ss) comprises at least one sensor arranged to perceive, for example in the form of objects and/or free-space, in at least one geographical area within said traffic environment, is arranged to act both as a sender ITS-S and a receiver ITS-S, and is arranged to use, as said ITS messages, collective perception messages (CPMs) containing at least information about the perception within a traffic environment. The method comprises the steps of sending, from an ITS-S acting as a sender ITS-S, an area perception request (APR) corresponding to a geographical area of interest, and requesting perception information from another ITS-S capable of perceiving in said geographical area; and receiving, from said another ITS-S, the requested perception information in a subsequent CPM of said another ITS-S. An intelligent transport system and a computer-implemented system corresponding to this method are also provided.

## Description

### Technical Field

The present invention relates to information exchange in a cooperative intelligent transport system (C-ITS), and more specifically to a method, a cooperative intelligent transport system and a computer-implemented system of exchanging information between stations in a C-ITS using a wireless communication channel. The information exchange comprises transmitting, receiving, processing and/or discarding a collective perception message (CPM) containing information about on-board sensors and/or objects and/or free-space detected by said on-board sensors within a traffic environment.

### Prior Art

A known cooperative intelligent transport system (C-ITS) comprises of stations (e.g., vehicles and/or roadside units) that exchange information with each other using (direct) wireless communication, known as vehicle-to-x, or vehicle-to-everything, (V2X) (direct).

V2X is a generic term for traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving traffic safety and optimizing traffic flow.

The ITS stations (ITS-Ss) in the C-ITS share CAMs (Cooperative Awareness Messages (CAMs) to inform each other about their own position, kinematics, and other data. The ITS stations use DENMs (Decentralized Environmental Notification Messages) to inform each other on dedicated events, such as hard braking or obstacles on the road.

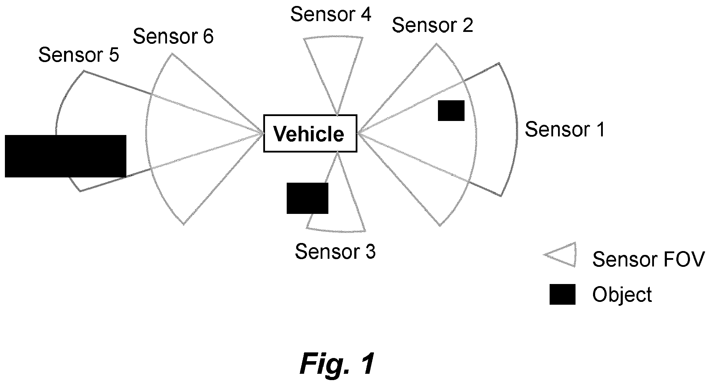

Another V2X message is the Collective Perception Message (CPM) that contains information about on-board sensors, such as field-of-views (FOVs), free-space, and the objects detected within the traffic environment by the on-board sensors of an ITS-S. Fig. 1 shows an example of a vehicle setup comprising a vehicle with sensors 1 to 6 each having a predetermined field-of-view. Exemplary objects are illustrated in the vicinity of the vehicle.

CPMs are sent out periodically and contain information on one or more detected objects, field-of-views and other characteristics of vehicle on-board sensors such as e.g., a radar, a camera and the like. CPMs are composed by the Collective Perception Service (CPS) within the facility layer of the ETSI ITS stack, as shown in Fig. 2 illustrating the ETSI ITS-Stack and CPS in a CPS-centric view. The current functions of CPS are illustrated in Fig. 3 and will be further referred to in connection with Fig. 4 below.

In C-ITS, a concept of Decentralized Congestion Control (DCC) is employed to handle a congested channel. DCC operates at all layers of the ETSI ITS stack.

In the technical field referred to so far, document US 10 796 501 B2 relates to interactive sharing of vehicle sensor information wherein a request from a node about an "area of interest" is dispatched and a response by another node with sensor information for this area is received, and as such refers to a request specifying a type of sensor information and at least one criterion for how to determine whether or not to respond. In this interactive sharing concept, a V2X message may be BSM or CAM.

Further, document US 10 360 797 B2 relates to request-response-based sharing of sensor information.

### Summary of the invention

### Technical Problem

The environment perception by an ITS-S has perception "blind-spots", i.e. areas where the ITS-S is able to perceive poorly or not at all, e.g. due to occlusion by objects, limitation in the capabilities of the sensors installed on the ITS-S, weather conditions and the like. These perception "blind-spots" can cause safety hazards in the traffic environment.

Although the concept of CPM tries to address this by allowing the ITS-Ss send their perceived objects / free-space to others, CPM is however limited in that an ITS-S cannot request perceived objects and/or free-space information for the blind-spot of this ITS-S.

### Solution to the Problem

It is an object of the present invention to improve, in a traffic environment, environment perception by a station operating in the traffic environment in areas where perception capabilities are limited.

This object is solved by the subject matters of claims 1, 11 and 12. Further aspects of the invention are defined in the subclaims.

An underlying idea of the present invention resides in using the concept of sensor information sharing of CPM for allowing the ITS-Ss to crowdsource perception information for a specific area by sending an Area Perception Request (APR) corresponding to an area (geographical area) for which they want to receive perception information. It may be preferable to send the APR as an optional container within a CPM. For a non-limiting example, an APR area of interest parameter may be of a format the same or similar to 'Geographic area' as mentioned in e.g. the ETSI EN 302 931 documentation.

The underlying idea and concept as above includes, with regard to a sending ITS-S, steps and means for determining how to compose an APR, such as assessing own perception blind spots by determining unperceived or poorly perceived areas in a circle of a certain radius (e.g., 200 meters at 50 km/h) and/or of a limited size (e.g., 100 m²) around a vehicle, selecting a most relevant of these blind-spots to be sent in the APRs, with a relevance being based on e.g. upcoming driving tasks, such as driving straight ahead, driving into an intersection, changing lane, or the proximity to the perception blind-spot, and including an APR within a CPM, e.g. within the next CPM to be sent out. A configuration may be such that a predetermined number of APRs, e.g. 16 APRs, in a CPM at one time is not exceeded. A configuration may be such that an APR is repeated as long as it is determined to be relevant. It is noted that the inventive concept of an APR is not limited to including it within a CPM. Sending out the APR as a separate message and not part of CPM is conceivable in a modification of the present invention.

Within the above idea and concept, the use of received APRs by one or more receiving ITS-Ss may be configured to include perceived objects / free-space information for the requested area(s) in the next CPM, and to trigger or cause an amendment or update of an object significance index (O-SI) such as an increase of the O-SI of an object based on a number of APRs corresponding to that object.

According to a first aspect of the present invention, a method for exchanging of information in an intelligent transport system between a plurality of intelligent transport system stations (ITS-Ss) in said intelligent transport system (ITS) using a wireless communication channel is provided. The exchanging of information comprises composing, transmitting, receiving and/or decoding at least part of ITS messages at and/or between the plurality of ITS-Ss. Each of said plurality of intelligent transport system stations (ITS-Ss) comprises at least one sensor arranged to perceive, for example in the form of objects and/or free-space, in at least one geographical area within said traffic environment, is arranged to act both as a sender ITS-S and a receiver ITS-S, and is arranged to use, as said ITS messages, collective perception messages (CPMs) containing at least information about the perception within a traffic environment. The method comprises the steps of sending, from an ITS-S acting as a sender ITS-S, an area perception request (APR) corresponding to a geographical area of interest, and requesting perception information from another ITS-S capable of perceiving in said geographical area, and receiving, from said another ITS-S, the requested perception information in a subsequent CPM of said another ITS-S.

In accordance with the first aspect, in blind-spot areas where the ITS-S is able to perceive poorly or not at all, e.g. due to occlusion by objects, limitation in the capabilities of the sensors installed on the ITS-S, weather conditions and the like, an ITS-S sending and receiving CPMs is configured to include a request for perceived objects and/or free-space information for the blind-spot of this ITS-S. It is noted here that the general concept of the present invention does not limit the request to e.g. specifying the type of sensor information and a particular criterion for how to determine whether or not to respond and the like, and specifying the V2X message to be CPM. Further, the inventive concept is configured to provide for sending of requests for multiple areas of interest in one go and using one or more area requests for significance assessment of objects detected by an own sensor and/or free-space.

According to a second aspect of the present invention, which depends on the first aspect, said geographical area of interest is an area in which perception is only partially or not at all possible by the at least one sensor of the sender ITS-S, and/or an already perceived area requested for redundancy and/or security.

According to a third aspect of the present invention, which depends on the second aspect, an area perception request (APR) is included in a next CPM to be sent out, for example, by being relevant with respect to at least a driving task of the sender ITS-S and/or a proximity to a perception blind spot of the at least one sensor of the sender ITS-S. Preferably, this APR is included in subsequent CPMs to be sent out and repeated as long as it remains of interest to the sender ITS-S. It is noted that also a cancellation is possible by e.g. making use of parameters such as Request ID and Status of the request, wherein Status of the request may include status such as "new", "active", "cancellation" and the like, without being limited thereto.

According to a fourth aspect of the present invention, which depends on any of the first to third aspects, a plurality of area perception requests (APRs) for multiple geographical areas of interest is sent, by the sender ITS-S, in one go, for example within a single CPM.

According to a fifth aspect of the present invention, which depends on the fourth aspect, said plurality of area perception requests (APRs) is used, by a receiving ITS-S, for significance assessment of own sensor perception information.

According to a sixth aspect of the present invention, which depends on the fourth aspect, said plurality of area perception requests (APRs) is sent within CPMs and used, by a receiving ITS-S, for significance assessment of own sensor perception information.

According to a seventh aspect of the present invention, which depends on the sixth aspect, an area perception request is sent as an optional container within a CPM.

According to an eighth aspect of the present invention, which depends on any of the first to seventh aspects, the wireless communication is direct vehicle-to-x (V2X) communication. Here, the ITS-S is preferably a vehicle and an unperceived or poorly perceived area in a region of a predetermined size and shape is determined to represent said geographical area of interest in which perception is partially or not at all possible. The ITS-S may, however, also be a Roadside Unit (RSU), and said geographical area of interest may also be represented by an already perceived area for which information is requested, for example for redundancy and/or security reasons.

According to a ninth aspect of the present invention, which depends on the eighth aspect, a most relevant geographical area to be sent in an area perception request (APR) is selected based on a driving task of the vehicle and/or a proximity to a perception blind spot of the at least one sensor of the sender ITS-S.

According to a tenth aspect of the present invention, which depends on any of the first to ninth aspects, a significance index (SI) is calculated for an object based on the number of area perception requests (APRs) from other sender ITS-Ss of an area in which an object detected by a host ITS-S is located.

According to an eleventh aspect of the present invention, an intelligent transport system for exchanging of information in an intelligent transport system between a plurality of intelligent transport system stations (ITS-Ss) in said intelligent transport system (ITS) uses a wireless communication channel. The exchanging of information comprises composing, transmitting, receiving and/or decoding at least part of ITS messages at and/or between said plurality of ITS-Ss. Each of said plurality of intelligent transport system stations (ITS-Ss) comprises at least one sensor arranged to perceive, for example in the form of objects and/or free-space, in at least one geographical area within said traffic environment, is arranged to act both as a sender ITS-S and a receiver ITS-S, and is arranged to use, as said ITS messages, collective perception messages (CPMs) containing at least information about the perception within a traffic environment. The system comprises a sender ITS-S arranged to send, to another ITS-S acting as a receiver ITS-S, an area perception request (APR) corresponding to a geographical area of interest, wherein said APR requests perception information from another ITS-S capable of perceiving in said geographical area, and the receiver ITS-S arranged to receive said area perception request (APR) from said sender ITS-S, being capable of detecting said object in said geographical area, and arranged to transmit, to said sender ITS-S, the requested perception information including information about said object in a subsequent CPM to be sent out.

According to a twelfth aspect of the present invention, a computer-implemented system for exchanging of information in an intelligent transport system between a plurality of intelligent transport system stations (ITS-Ss) in said intelligent transport system (ITS) uses a wireless communication channel. The exchanging of information comprises composing, transmitting, receiving and/or decoding at least part of ITS messages at and/or between said plurality of ITS-Ss. Each of said plurality of intelligent transport system stations (ITS-Ss) comprises at least one sensor arranged to perceive, for example in the form of objects and/or free-space, in at least one geographical area within said traffic environment, is arranged to act both as a sender ITS-S and a receiver ITS-S, and is arranged to use, as said ITS messages, collective perception messages (CPMs) containing perception information within a traffic environment. The computer-implemented system comprises a memory for storing instructions which, when carried out by a processor, cause the processor to perform the steps of sending, from an ITS-S acting as a sender ITS-S, an area perception request (APR) corresponding to a geographical area of interest, and requesting perception information from another ITS-S capable of detecting said object in said geographical area, and receiving, from said another ITS-S, the requested perception information including perception information in a subsequent CPM of said another ITS-S.

It is understood that the above second to tenth aspects are likewise and correspondingly applicable to the systems according to the eleventh and twelfth aspects of the present invention.

The present invention is designed to advantageously provide for a consideration of additional parameters (e.g. detection confidence, location discrepancy etc.) for significance determination, a consideration of any type of objects (not just e.g. VRUs), a consideration of any type of ITS-S (not just e.g. vehicles), a consideration of Area perception Requests (APR), a transmission of the significance parameter itself, a selective aggregation of objects (as opposed to single message per object, or aggregation of all detected objects in one message), and a consideration of a specific V2X message (CPM).

As further understood, in the above context and without being limited thereto, ITS-Ss at least comprise vehicles and/or roadside units in the traffic environment the afore-mentioned aspects are applicable to.

### Brief Description of the Drawings

Hereinafter, the present invention is described more in detail with reference to the drawings and the corresponding detailed description, wherein:
Fig. 1 illustrates an exemplary vehicle setup in which a vehicle is equipped with sensors each having a predetermined field-of-view and exemplary objects are located in the vicinity of the vehicle;

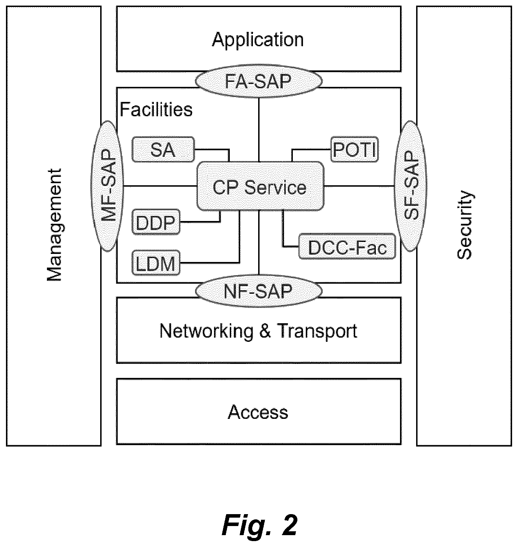

Fig. 2 illustrates the ETSI ITS-Stack and CPS in a CPS-centric view;

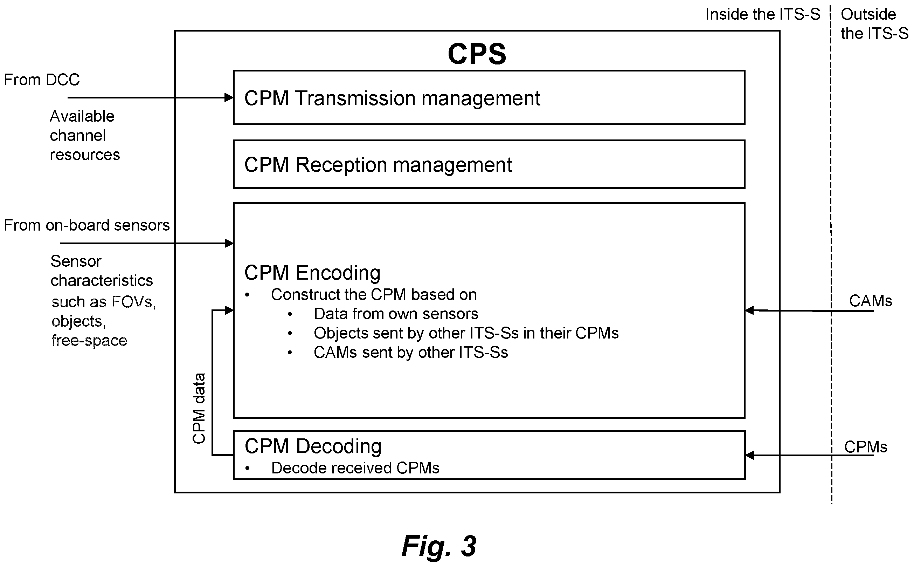

Fig. 3 illustrates functions of the CPS of Fig. 2 as specified in current ETSI standards;

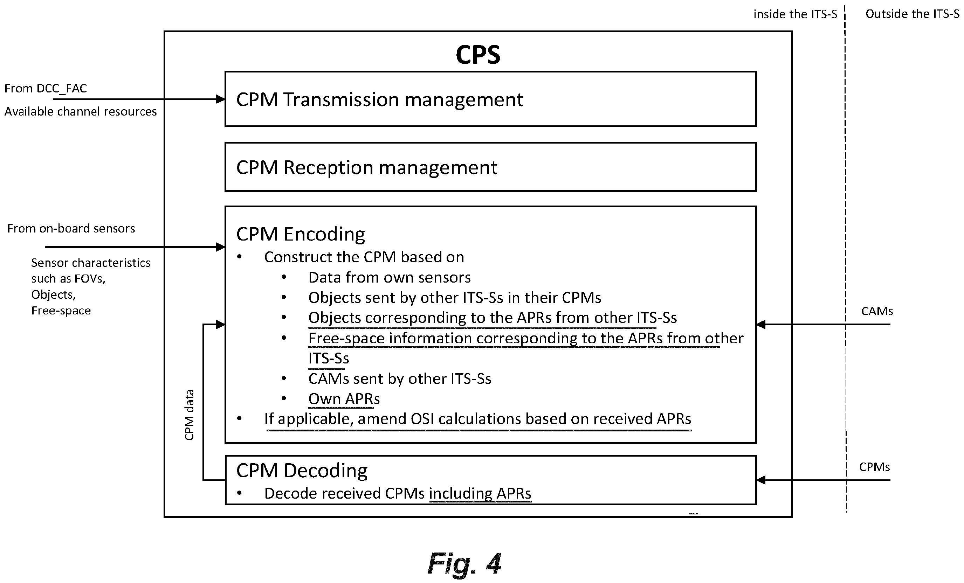

Fig. 4 illustrates changes to CPS functions according to an embodiment in comparison to Fig. 3;

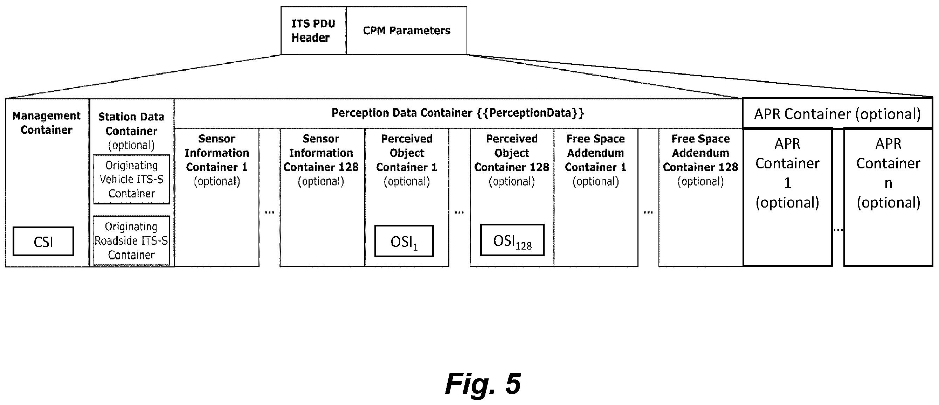

Fig. 5 depicts, in a general overview, where additions according to the embodiment may suitably weave into the current ETSI CPM format.

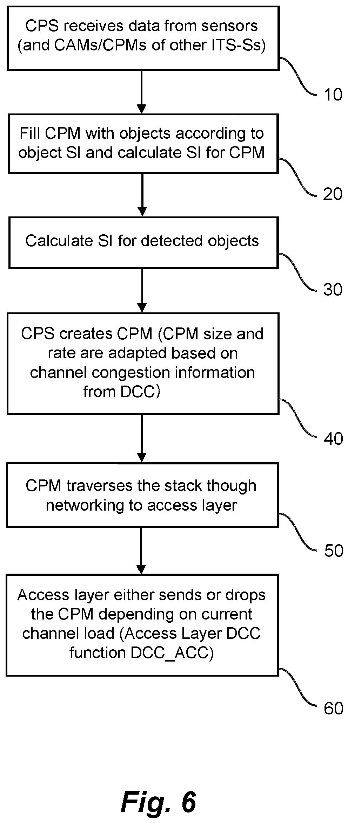

Fig. 6 illustrates the interlinking of CPM transmission and DCC executed at an ITS-S at layers of the ETSI ITS stack including an exemplary concept of a significance index introduced into CPMs;

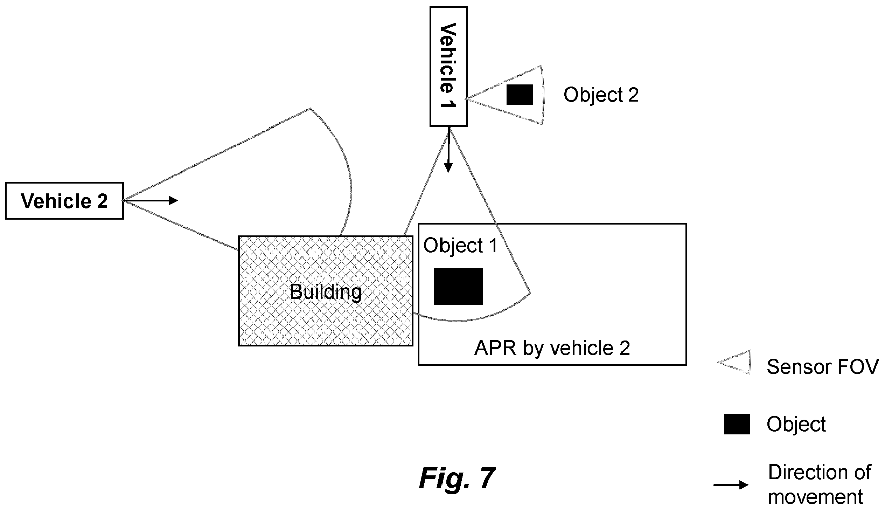

Fig. 7 illustrates another exemplary vehicle setup in the embodiment where a vehicle makes an Area Perception Request (APR) for an area occluded by a building and another vehicle correspondingly includes an occluded object in its next CPM;

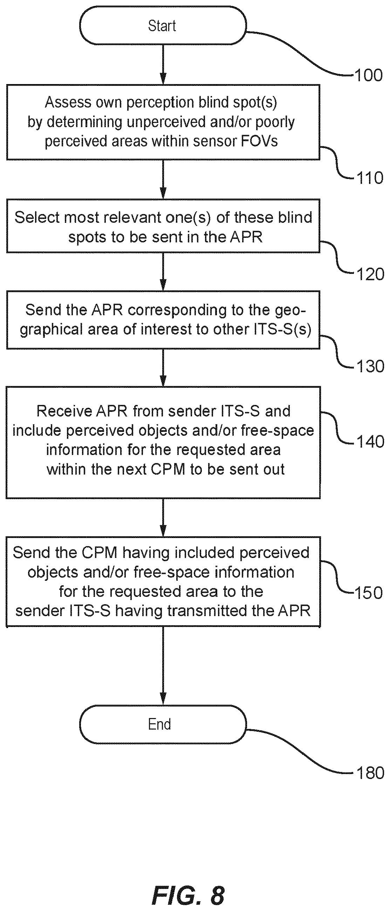

Fig. 8 shows an illustrative flow chart of a process according to the present invention.

### Description of the Embodiment

As mentioned at the outset, V2X is a generic term for traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving traffic safety and optimizing traffic flow.

Two alternative access layer technologies for ITS have been defined by the Institute of Electrical and Electronics Engineers (IEEE) and the Third Generation Partnership Project (3GPP), respectively.

The first approach is often referred to as Dedicated Short-Range Communication (DSRC), which supports vehicular ad-hoc connectivity using Wireless Local Area Network (WLAN) technologies standardized as IEEE 802.11p, which is the basis for the European standard ETSI ITS-G5. The second approach is Cellular-based V2X (C-V2X), a proposal by the 3GPP, based on Long-Term Evolution (LTE), also known as LTE-V2X or sidelink.

In this context, cooperative awareness within road traffic means that road users and roadside infrastructure are informed about each other's position, dynamics and attributes. Road users are all kind of users on or near the road that play a role in traffic safety and control, such as cars, trucks, motorcycles, bicycles or even pedestrians and roadside infrastructure equipment including road signs, traffic lights or barriers and gates. The awareness of each other is the basis for several road safety and traffic efficiency applications with many use cases as described in ETSI TR 102 638. It is achieved by regular broadcasting of information among the road users, from vehicle to vehicle (V2V), but also from infrastructure to any road user, V2I, 12V or X2X based on wireless networks, called V2X network and as such is part of Intelligent Transport Systems (ITS).

Cooperative safety and traffic efficiency applications require Intelligent Transportation System (ITS) sub-systems (road users, roadside units, etc.) and their ITS-Stations (ITS-Ss) to develop situational awareness that includes the presence and behavior of road users in their vicinity. Vehicle sub-systems and roadside sub-systems develop their situational awareness from their perception sensors and through communication with other surrounding ITS-Ss. The CA basic service EN 302 637-2, is a European Norm (EN) that specifies how an ITS-S can inform others about its associated sub-systems position, dynamics and attributes by sending Cooperative Awareness Messages (CAMs) according to EN 302 637-2.

The Collective Perception service (CP service or CPS) complements the CA basic service. The CPS specification defines how an ITS-S can inform others about the position, dynamics and attributes of neighboring road users, other objects, and free-space detected by local perception sensors. The CPS enables ITS sub-systems to share information about other road users and obstacles that were detected by local perception sensors such as radars, cameras and the like. In that sense, it aims at increasing awareness between ITS sub-systems by mutually contributing information about their perceived objects to the individual knowledge base of the sub-system.

The Collective Perception Message (CPM) enables sharing of information about detected objects by the disseminating ITS sub-system. The message consists of information about the disseminating ITS sub-system, its sensory capabilities and its detected objects. For this purpose, the message provides generic data elements to describe detected objects in the reference frame of the disseminating ITS sub-system. The CPM is transmitted cyclically with adaptive message generation rates to decrease the resulting channel load while focusing on reporting changes in the dynamic road environment.

In particular, draft ETSI Technical Specification ETSI TS 103 324, currently in the form of V0.0.22 draft (2021-05), focuses on the specifications of CPMs transmitted by ITS-Ss participating in the V2X network and the specification of the CPS with trigger conditions for sending CPMs.

As used herein, an object in the context of the CPS is defined as the state space representation of a physically detected object within a sensor's perception range, an object list is defined as a collection of objects temporally aligned to the same timestamp, the Collective Perception (CP) Service is defined as a facility at the ITS-S facilities layer to generate, receive and process CPMs, the Collective Perception Message (CPM) is defined as a CP service PDU (Protocol Data Unit), Collective Perception Message (CPM) data is defined as a partial or complete CPM payload, the Collective Perception (CPM) protocol is defined as the ITS facilities layer protocol for the operation of the CPM transmission and reception, an ITS station is defined as a functional entity specified by the ITS station (ITS-S) reference architecture, an Object confidence is defined as a quantification of the confidence that a detected object actually exists, i.e., has been detected previously and has continuously been detected by a sensor, a Roadside ITS station is defined as an ITS station in a roadside ITS sub-system, a Sensor Measurement is defined as the operation of a sensor based on its working principle to generate a state space representation for detected objects, a State Space Representation is defined as the mathematical description of a detected object consisting of state variables such as distance, speed, object dimensions, etc., and a Vehicle ITS station is defined as an ITS station in a vehicular ITS sub-system. CPU(s) in an ITS-S carry out the respective layer functions, namely application layer, facilities layer, and network and transport layer.

Fig. 2 depicts in more detail the Collective Perception (CP) service within the ITS-S architecture along with the logical interfaces to other layers and entities within the Facilities layer. The CPS is a Facilities layer entity in the ITS-S-S architecture. It interfaces with other entities of the Facilities layer and with ITS applications to collect relevant information for CPM generation and for forwarding received CPM content for further processing.

The entities for the collection of data to generate a CPM are the Device Data Provider (DDP), the Position and Time management (POTI) and the Local Dynamic Map (LDM). For vehicle ITS sub-systems, the DDP is connected with the in-vehicle network and provides the vehicle state information. For roadside ITS sub-systems, the DDP is connected to sensors mounted on the roadside infrastructure such as poles or gantries. The POTI entity provides the position of the ITS-S and time information. The LDM is a database in the ITS-S, which in addition to on-board sensor data is configured to be updated with received data from message such as CAM and CPM. ITS applications retrieve information from the LDM for further processing. The CPS also interfaces with the Service Announcement (SA) Service to indicate an ITS-S's ability to generate CPMs and to provide details about the communication technology/ies used.

Message dissemination-specific information related to the current channel utilization are received by interfacing with the DCC-FAC (Decentralized Congestion Control for Facility Layer) entity and the DCC-Cross entity (located in the Management plane, not shown in Fig.2). The CPS interfaces through the NF-SAP (SAP for Networking-Facility layer interface) with the networking & transport layer (N&T) for exchanging of CPMs with other ITS-Ss, the SF-SAP (SAP for Security-Facility layer interface) with the Security entity to access security services for CPM transmission and CPM reception, the MF-SAP (SAP for Management-Facility layer interface) with the Management entity and the FA-SAP (SAP for Facility-Application layer interface) with the application layer if received CPM data is provided directly to the applications. It is noted that SAP stands for Service Access Point, and that SA stands for Service Announcement.

As shown in Fig. 3, the CPS functions in a respective ITS-S encompass CPM transmission management, CPM reception management, CPM encoding and CPM decoding based on input from the DCC (including e.g. information about available channel resources), from on-board sensors (including e.g. information about sensor characteristics, FOVs, objects, free-space), CAMs and CPMs (from outside the respective ITS-S, e.g. from one or more other ITS-Ss).

Fig. 4 illustrates changes to CPS functions according to the embodiment in comparison to Fig. 3. The changes are marked underlined in Fig. 4 and will be referred to in greater detail hereinbelow.

Fig. 5 illustrates a current state of the ETSI CPM format and identifies where the present invention might weave into this format. Current ETSI developments to specify the CPS service are described in a Technical Report describing the CPM format and the CPM generation rules as a baseline for the specification of CPS in ETSI TS 103 324.

As shown in Fig. 5, CPM messages include an ITS (Intelligent Transport Systems) PDU (Protocol Data Unit) header and 4 types of containers: A Management Container, a Station Data Container, a plurality of Sensor Information Containers (SICs) and a plurality of Perceived Object Containers (POCs).

The ITS PDU header includes data elements like a protocol version, a message ID and a Station ID. The Management Container is mandatory and provides basic information about a transmitting vehicle (such as the position thereof). Position information is used by a receiver to reference detected objects. The Station Data Container is optional and includes additional information about the transmitting vehicle (e.g., its speed, heading, or acceleration). In addition, a CPM can include up to 128 SICs to describe the capabilities of sensors embedded in the transmitting vehicle. Finally, the POCs provide information about detected objects (e.g., a distance between the detected object and the transmitting vehicle), a speed and dimensions of an object, and the time at which these measurements were done. A single CPM can include up to 128 POCs.

The CPM generation rules define when a vehicle should generate and transmit a CPM and the information to be included in the CPM. Current ETSI CPM generation rules establish that a vehicle has to check in predetermined intervals if a new CPM should be generated and transmitted. By default, the predetermined interval is set to 100ms although it can be any multiple of 100ms in the range between 100ms and 1000ms. For every predetermined interval, a vehicle should generate a new CPM if it has detected a new object, or if its absolute position has changed by more than a predetermined amount, e.g. 4m, since the last time its data was included in a CPM, or if its absolute speed has changed by more than a predetermined value, e.g. 0.5m/s, since the last time its data was included in a CPM, or if the last time the detected object was included in a CPM was a predetermined period of time, e.g. 1 (or more) seconds, ago. A vehicle includes in a new CPM all new detected objects and those objects that satisfy at least one of the previous conditions. The vehicle still generates a CPM every second even if none of the detected objects satisfy any of the previous conditions. The information about the onboard sensors is included in the CPM only once per second.

According to Fig. 5, as further shown, the present invention might weave into the pending ETSI CPM format as APR containers 1 to 16, cf. the right-hand side of Fig. 5.

In the above context, Fig. 6 illustrates the interlinking of CPM transmission and DCC in an ITS-S at layers of the ETSI ITS stack including the concept of a significance index introduced into CPMs. At a step 10 in Fig. 6, the CPS receives data from sensors and/or CAMs/CPMs of other ITS-Ss. At a step 20, after the CPS has received the data from sensors and/or the CAMs/CPMs of other ITS-Ss at step 10, the CPM is filled with object data of the objects according to an object significance index (O-SI). At a step 30, an SI for detected objects is calculated. At a step 40, the CPS creates a CPM, wherein the CPM size and rate are adapted based on channel congestion information from DCC. At a step 50, the CPM traverses the stack through the networking layer to the access layer. At a step 60, the access layer either sends or drops the CPM depending on the current channel load (Access Layer DCC function DCC-ACC). It is noted that steps 20 and 30 in Fig. 6 for calculating the O-SI and filling a CPM with object data of the objects in accordance with their O-SI is an exemplary way to calculate the CPM-SI. Other ways of calculating the CPM-SI are conceivable and the way disclosed herein in steps 20 and 30 is a preferable example but imposes no limitation on how the priority of CPMs is determined.

The present invention has a plurality of aspects, an overview of which is given in the following:
Within the context of CPS functions, which according to Fig. 3 encompass CPM transmission management, CPM reception management, CPM encoding and CPM decoding, the existing CPS functions are expanded and/or adapted by incorporating a concept of sensor information sharing of CPM for allowing the ITS-Ss to crowdsource perception information for a specific area by an ITS-S sending an Area Perception Request (APR) corresponding to an area for which it wants to receive perception information. An example here for is shown in Fig. 7. The APR is preferably sent as an optional container within a CPM, as shown in Fig. 5). An APR area of interest parameter may have a same or similar format as 'geographic area' mentioned in document ETSI EN 302 931.

Here, it is conceivable that other ITS-Ss than an (own) host ITS-S can influence the SI calculation of the host ITS-S by sending a request for an area for which they want to receive object information, and further other applications within the C-ITS system, such as on-demand CPM transmission, are conceivable as well.

Also, with respect to the need of other ITS-Ss, objects that are difficult or impossible to be detected by a neighboring ITS-S, e.g., occluded objects that are partially or fully hidden based on the positions of the other known objects and the FOVs of the sensors of the known neighboring vehicles are also preferably taken into account when determining the object significance.

With respect to the need of other ITS-Ss, a number of area perception requests (APRs) by other ITS-Ss of an area in which an object detected by a host ITS-S is located, are preferably taken into account when determining the object significance. Here, as non-limiting examples, the request for this area may be explicitly sent out by a neighboring ITS-S, and/or the request may be part of an optional container within the CPM where the sending ITS-S can indicate the area for which it would like to receive object information. Fig. 7 shows an illustrative example where in a traffic environment including a first and a second vehicle, a first and a second object and e.g., a building, the first object (Object 1) is deemed more significant than the second object (Object 2) by the first vehicle (Vehicle 1) because the first object falls in an area perception request (APR) area of the second vehicle (Vehicle 2). For example, in Fig. 7, the second vehicle (Vehicle 2) makes an Area Perception Request (APR) for the area occluded by a building and the first vehicle (Vehicle 1) correspondingly includes object 1 in its next CPM.

Fig. 8 shows an illustrative flow chart of a process of exchanging of information in an intelligent transport system between a plurality of ITS-Ss, which generally includes composing, transmitting, receiving and/or decoding CPMs sent out periodically and containing information on one or more detected objects and/or FOVs and other characteristics of on-board sensors such as radar or camera(s), beyond the concept of CPM in which ITS-Ss can send their perceived objects and/or free-space to other ITS-Ss.

In a step 110, a sender ITS-S assesses its own perception blind spots by determining unperceived and/or poorly perceived areas within the FOVs of its sensors to determine how to compose an APR.

For example, when determining the unperceived and/or poorly perceived areas, the ITS-S uses a circle of a predetermined radius (e.g., 200 m at 50 km/h) around the vehicle. It is understood here that the radius is not limited to a particular value and may be fixed or vehicle speed dependent, or may depend on other environment factors such as traffic density, building density, or a geographical area (rural, urban, etc.) the vehicle is traveling in. The ITS-S may impose an appropriate limit on the size of the area, e.g. limit the size of the area to 100 m², depending on a current state and/or situation.

In a step 120, among determined unperceived and/or poorly perceived areas, or perception blind spots, the sender ITS-S selects the most relevant one(s) of these blind spots to be included within and sent in the APR. As used herein, relevance may be determined based on e.g. upcoming driving tasks such as driving straight ahead, driving into an intersection, changing lane and the like, or may be based on a determined proximity to a particular perception blind spot.

In a step 130, the sender ITS-S includes the APR corresponding to a geographical area of interest within a CPM to be sent out to other ITS-Ss. Here, the sender ITS-S preferably includes the APR within the next CPM to be sent out, without however being limited thereto. A configuration may be such that the inclusion of APRs within a CPM is limited to a predetermined number of APRs, e.g. 16, as rules permit. For example, the sender ITS-S may not exceed 16 APRs in one CPM at one time. Also, a configuration may be such that an APR is repeated as long as it remains relevant (cf. the description as to relevance above). As used herein, a geographical area of interest is preferably an area for which the sender ITS-S seeks to receive perception information. It is noted that the APR is not necessarily limited to be included within a CPM. An APR could also be sent out as a separate message and not as part of a CPM.

In a step 140, the APR sent by the sender ITS-S is received at a receiver ITS-S capable of perceiving in the specified geographical area and decoded thereat. If the receiver ITS-S perceives, or has perceived, objects in the specified geographical area, it includes such objects and/or free-space information for the requested area(s) in the next CPM it is going to send out.

It is noted that in case of limited processing capacity and where CPMs received from other ITS-Ss include a collective perception message significance index (CPM-SI), the arrangement is preferably such that CPMs with a high CPM-SI are processed first.

Finally, in a step 150, the receiver ITS-S sends the CPM having included perceived objects and/or free-space information for the requested area to the sender ITS-S having transmitted the APR. Thanks to the CPM-APR concept according to the present invention, the sender ITS-S having transmitted the APR is in this manner provided with perception information it cannot obtain itself due to its perception blind spot(s) it has determined at that time.

The technical effect of APR and APR Containers resides in expanding the V2X shared messaging to using CPM or a dedicated APR message for crowdsourcing perception information for a specific area in a traffic environment. A further technical effect of employing APR and APR Containers resides in that APR allows for using the requests for significance assessment of own sensor detected objects / free-space. The concept of APR and APR Containers adds to current techniques and standards in that one or more CPM(s) are sent out if an APR for an area is present. It also adds to CPM generation rules in, with regard to perceived object inclusion management, that upon receiving APR(s) all objects within the requested area(s) are included in the next CPM to be sent out, with regard to free-space addendum container inclusion management, that upon receiving APR(s) from other ITS-Ss, all the free-space information within the requested area(s) is included in the next CPM to be sent out, and with regard to a new APR container inclusion management, that all the relevant APRs are included within the APR container and a limit for the number of APRs in CPM at one time is considered and/or introduced.

The present invention has been described using one preferred embodiment thereof. It is, however, understood that the present invention is not limited to the specifically described embodiment and can include and cover additional aspects, configurations and modifications without departing from the scope of the subject matter described and claimed. Such additional aspects, configurations and modifications may, for example, include a method, a computing program, and an equipment for composing, transmitting, receiving, and decoding an ITS message or part of an ITS message containing information on a geographical area which is only partially or not at all detected by the sensors of the sender ITS-S and/or a relevance of the above area for the sender ITS-S.

Such additional aspects, configurations and modifications may, for example, further include a method, a computing program, and an equipment for calculating the relevance of a geographical area based on upcoming driving tasks, such as driving straight ahead, driving into an intersection, changing lane, and/or the proximity to the perception blind-spot.

Still further aspects, configurations and modifications may, for example, relate to a method, a computing program, and an equipment for deciding to compose a CPM based on a received APR, and/or a method, a computing program, and an equipment for calculating a significance index (SI) for each object based on the number of APRs by other ITS-Ss of an area in which an object detected by a host ITS-S is located.

In general, embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of this invention may be implemented by computer software executable by a data processor of a system entity, such as in the processor entity, or by hardware, or by a combination of software and hardware. Further in this regard it should be noted that any blocks of logic flow shown in the figures may represent program steps, or interconnected logic circuits, blocks and functions, or a combination of program steps and logic circuits, blocks and functions. The software may be stored on physical media such as memory chips, or memory blocks implemented within the processor, magnetic media such as hard disk or floppy disks, and optical media such as for example DVD and the data variants thereof, CD.

Memory may be of any type suitable to the local technical environment and may be implemented using any suitable data storage technology, such as semiconductor-based memory devices, magnetic memory devices and systems, optical memory devices and systems, fixed memory and removable memory. Data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Electronic Design Automation (EDA) programs and tools automatically route conductors and locate components on a semiconductor chip using well established rules of design as well as libraries of pre-stored design modules. Once the design for a semiconductor circuit has been completed, the resultant design, in a standardized electronic format may be transmitted to a semiconductor fabrication facility or "fab" for fabrication.

The description so far has provided by way of an exemplary and non-limiting example a full and informative description of the exemplary embodiment of this invention. However, various modifications and adaptations may become apparent to those skilled in the relevant art in view of the foregoing description, when read in conjunction with the accompanying drawings and the appended claims. It is understood that all such and similar modifications of the teachings of this invention will still fall within the scope of this invention as defined in the appended claims.

With the present invention as described above, a method for exchanging of information in an intelligent transport system between a plurality of intelligent transport system stations (ITS-Ss) in said intelligent transport system (ITS) uses a wireless communication channel. The exchanging of information comprises composing, transmitting, receiving and/or decoding at least part of ITS messages at and/or between said plurality of ITS-Ss, wherein each of said plurality of intelligent transport system stations (ITS-Ss) comprises at least one sensor arranged to perceive, for example in the form of objects and/or free-space, in at least one geographical area within said traffic environment, is arranged to act both as a sender ITS-S and a receiver ITS-S, and is arranged to use, as said ITS messages, collective perception messages (CPMs) containing at least information about the perception within a traffic environment. The method comprises the steps of sending, from an ITS-S acting as a sender ITS-S, an area perception request (APR) corresponding to a geographical area of interest, and requesting perception information from another ITS-S capable of perceiving in said geographical area; and receiving, from said another ITS-S, the requested perception information in a subsequent CPM of said another ITS-S. An intelligent transport system and a computer-implemented system corresponding to this method are also provided.

## Claims

1. A method for exchanging of information in an intelligent transport system between a plurality of intelligent transport system stations (ITS-Ss) in said intelligent transport system (ITS) using a wireless communication channel, said exchanging of information comprising composing, transmitting, receiving and/or decoding at least part of ITS messages at and/or between said plurality of ITS-Ss, wherein
each of said plurality of intelligent transport system stations (ITS-Ss) comprises at least one sensor arranged to perceive, for example in the form of objects and/or free-space, in at least one geographical area within said traffic environment, is arranged to act both as a sender ITS-S and a receiver ITS-S, and is arranged to use, as said ITS messages, collective perception messages (CPMs) containing at least information about the perception within a traffic environment,
said method comprising the steps of:
sending, from an ITS-S acting as a sender ITS-S, an area perception request (APR) corresponding to a geographical area of interest, and requesting perception information from another ITS-S capable of perceiving in said geographical area; and
receiving, from said another ITS-S, the requested perception information in a subsequent CPM of said another ITS-S.

2. A method according to claim 1, wherein said geographical area of interest is an area in which perception is only partially or not at all possible by the at least one sensor of the sender ITS-S, and/or an already perceived area requested for redundancy and/or security.

3. A method according to claim 1 or 2, wherein an area perception request (APR) is included in a next CPM to be sent out, for example, by being relevant with respect to at least a driving task of the sender ITS-S and/or a proximity to a perception blind spot of the at least one sensor of the sender ITS-S.

4. A method according to one of the preceding claims, wherein a plurality of area perception requests (APRs) for multiple geographical areas of interest is sent, by the sender ITS-S, in one go, for example within a single CPM.

5. A method according to claim 4, wherein said plurality of area perception requests (APRs) is used, by a receiving ITS-S, for significance assessment of own sensor perception information.

6. A method according to claim 4, wherein said plurality of area perception requests (APRs) is sent within CPMs and used, by a receiving ITS-S, for significance assessment of own sensor perception information.

7. A method according to claim 6, wherein an area perception request is sent as an optional container within a CPM.

8. A method according to one of the preceding claims, wherein the wireless communication is direct vehicle-to-x (V2X) communication, wherein an unperceived or poorly perceived area in a region of a predetermined size and shape is determined to represent said geographical area of interest in which perception is partially or not at all possible.

9. A method according to claim 8, wherein a most relevant geographical area to be sent in an area perception request (APR) is selected based on a driving task of the vehicle and/or a proximity to a perception blind spot of the at least one sensor of the sender ITS-S.

10. A method according to one of the preceding claims, wherein a significance index (SI) is calculated for an object based on the number of area perception requests (APRs) from other sender ITS-Ss of an area in which an object detected by a host ITS-S is located.

11. An intelligent transport system for exchanging of information in an intelligent transport system between a plurality of intelligent transport system stations (ITS-Ss) in said intelligent transport system (ITS) using a wireless communication channel, said exchanging of information comprising composing, transmitting, receiving and/or decoding at least part of ITS messages at and/or between said plurality of ITS-Ss, wherein
each of said plurality of intelligent transport system stations (ITS-Ss) comprises at least one sensor arranged to perceive, for example in the form of objects and/or free-space, in at least one geographical area within said traffic environment, is arranged to act both as a sender ITS-S and a receiver ITS-S, and is arranged to use, as said ITS messages, collective perception messages (CPMs) containing at least information about the perception within a traffic environment,
said system comprising:
a sender ITS-S arranged to send, to another ITS-S acting as a receiver ITS-S, an area perception request (APR) corresponding to a geographical area of interest, said APR requesting perception information from another ITS-S capable of perceiving in said geographical area; and
the receiver ITS-S arranged to receive said area perception request (APR) from said sender ITS-S, being capable of detecting said object in said geographical area, and arranged to transmit, to said sender ITS-S, the requested perception information including information about said object in a subsequent CPM to be sent out.

12. A computer-implemented system for exchanging of information in an intelligent transport system between a plurality of intelligent transport system stations (ITS-Ss) in said intelligent transport system (ITS) using a wireless communication channel, said exchanging of information comprising composing, transmitting, receiving and/or decoding at least part of ITS messages at and/or between said plurality of ITS-Ss, wherein
each of said plurality of intelligent transport system stations (ITS-Ss) comprises at least one sensor arranged to perceive, for example in the form of objects and/or free-space, in at least one geographical area within said traffic environment, is arranged to act both as a sender ITS-S and a receiver ITS-S, and is arranged to use, as said ITS messages, collective perception messages (CPMs) containing perception information within a traffic environment,
said computer-implemented system comprising a memory for storing instructions which, when carried out by a processor, cause the processor to perform the steps of:
sending, from an ITS-S acting as a sender ITS-S, an area perception request (APR) corresponding to a geographical area of interest, and requesting perception information from another ITS-S capable of detecting said object in said geographical area; and
receiving, from said another ITS-S, the requested perception information including perception information in a subsequent CPM of said another ITS-S.
